# EUROPEAN PATENT APPLICATION

(11) **EP 4 261 664 A1**
(43) Date of publication of application: **18.10.2023**
(21) Application number: 22745121.8
(22) Date of filing: 20.01.2022
(51) Int. Cl.: G06F 3/041

(54) **TOUCH DISPLAY PANEL AND TOUCH DISPLAY DEVICE**

(30) Priority: 27.01.2021 CN 202110113359
(71) Applicant: Huawei Technologies Co., Ltd., Shenzhen, Guangdong 518129 (CN)
(72) Inventor: CHEN, Zesheng, Shenzhen, Guangdong 518129 (CN); KUO, Tawei, Shenzhen, Guangdong 518129 (CN); ZHANG, Junyong, Shenzhen, Guangdong 518129 (CN); TIAN, Zheng, Shenzhen, Guangdong 518129 (CN); DENG, Kaifeng, Shenzhen, Guangdong 518129 (CN)
(74) Representative: Goddar, Heinz J.
(86) International application number: PCT/CN2022/072984
(87) International publication number: WO 2022/161246

(57) **Abstract**

A touch display panel (10) and a touch display apparatus for reducing capacitive load are disclosed. The touch display panel (10) includes an array substrate (11), a display medium layer (13), and a package substrate (15) that are sequentially stacked. The package substrate (15) includes a first surface (151) and a second surface (152) that are oppositely disposed, where the first surface (151) is disposed adjacent to the display medium layer (13), the second surface (152) is away from the display medium layer (13), and a first metal layer and a second metal layer are sequentially stacked on the second surface (152) and are mutually insulated. The first metal layer includes a plurality of first conductive patterns (P1) extending in a first direction, the plurality of first conductive patterns (P1) are spaced by a preset distance in a second direction, and the first direction is perpendicular to the second direction. The second metal layer includes a plurality of second conductive patterns (P2) extending in the second direction, and the plurality of second conductive patterns (P2) are spaced by a preset distance in the first direction. The first conductive pattern (P1) and the second conductive pattern (P2) partially overlap to form a mutual-capacitive induction capacitance, and a first sensing signal is output when a touch operation is sensed.

## Description

This application claims priority to Chinese Patent Application No. 202110113359.X, filed with the China National Intellectual Property Administration on January 27, 2021 and entitled "TOUCH DISPLAY PANEL AND TOUCH DISPLAY APPARATUS", which is incorporated herein by reference in its entirety.

### TECHNICAL FIELD

This application relates to the touch display field, and in particular, to a touch display panel and a touch display apparatus.

### BACKGROUND

Currently, an electronic apparatus that can be used for interaction usually includes a touch display panel. A touch structure of the touch display panel includes a plurality of sensing electrodes. For a capacitive touch structure, an area of a touch sensing electrode affects a corresponding capacitance value. A large-sized touch display panel has a large quantity of sensing electrodes. Because there are a large quantity of touch electrodes, an area of a display electrode that faces the touch electrodes and that is used for image display is large. Therefore, heavy capacitive load is generated between the touch electrode and the display electrode, and drive load of a touch control module (a touch sensing integrated circuit) connected to a touch cable increases.

### SUMMARY

To resolve the foregoing technical problem, embodiments of this application provide a touch display panel and a touch display apparatus with light capacitive load.

According to a first aspect, in an implementation of this application, the touch display panel includes an array substrate, a display medium layer, and a package substrate that are sequentially stacked, where the display medium layer emits light to display an image through cooperation with the array substrate and the package substrate, the package substrate includes a first surface and a second surface that are oppositely disposed, the first surface is disposed adjacent to the display medium layer, and the second surface is away from the display medium layer. A first metal layer and a second metal layer are sequentially stacked on the second surface and are mutually insulated. The first metal layer includes a plurality of first conductive patterns extending in a first direction, the plurality of first conductive patterns are spaced by a preset distance in a second direction, and the first direction is perpendicular to the second direction; and the second metal layer includes a plurality of second conductive patterns extending in the second direction, and the plurality of second conductive patterns are spaced by a preset distance in the first direction. The first conductive pattern and the second conductive pattern partially overlap to form an induction capacitance, and a first sensing signal is output when a touch operation is sensed.

Only some areas of the first metal layer and the second metal layer are provided with a conductive pattern, and the first conductive pattern and the second conductive pattern in the conductive patterns are respectively used as electrodes for touch, and cover a relatively small area of the display substrate. Therefore, an overlapping area of projections of the two conductive patterns on the array substrate on which the display electrode is disposed is small. In this case, capacitance load and impedance generated by each first conductive pattern and each second conductive pattern with the display electrode are small, thereby effectively reducing capacitance load of the touch sensing layer.

In an implementation, the first conductive pattern includes a plurality of first sub-metal conducting wires, and the plurality of first sub-metal conducting wires form a plurality of metal grids.

A shape of the metal grid is a rhombus, a rectangle, a square, or the like.

In an implementation, the first conductive pattern includes a plurality of first sub-metal conducting wires, and the plurality of first sub-metal conducting wires are disposed in parallel with each other.

In an implementation of this application, the first sub-metal conducting wire is a triangular wave-shaped metal conducting wire extending in the first direction.

In an implementation of this application, the first sub-metal conducting wire is two triangular wave-shaped parallel metal conducting wires that extend in the first direction.

In an implementation of this application, the first sub-metal conducting wire is a square wave-shaped metal conducting wire extending in the first direction.

In an implementation, the second conductive pattern includes a plurality of second sub-metal conducting wires, and the plurality of second sub-metal conducting wires form a plurality of metal grids. A shape of the metal grid is a rhombus, a rectangle, a square, or the like.

In an implementation, the second conductive pattern includes a plurality of second sub-metal conducting wires, and the plurality of second sub-metal conducting wires are disposed in parallel with each other.

In an implementation of this application, the second sub-metal conducting wire is a triangular wave-shaped metal conducting wire extending in the first direction.

In an implementation of this application, the second sub-metal conducting wire is two triangular wave-shaped parallel metal conducting wires that extend in the first direction.

In an implementation of this application, the second sub-metal conducting wire is a square wave-shaped metal conducting wire extending in the first direction, and the first sub-metal conducting wire is a rectilinear metal conducting wire extending in the second direction. Two adjacent first sub-metal conducting wires intersect two adjacent second sub-metal conducting wires to form one square metal grid, and a shape and a size of one metal grid are substantially the same as a shape and a size of a pixel unit Pixel.

In an implementation, in an area in which the first conductive pattern overlaps the second conductive pattern, at a location at which the first sub-metal conducting wire overlaps the second sub-metal conducting wire, the first sub-metal conducting wire has at least one opening part.

The opening part disposed at the location at which the first sub-metal conducting wire overlaps the second sub-metal conducting wire can effectively reduce an induction capacitance of the first sub-metal conducting wire and the second sub-metal conducting wire in a vertical stacking direction, thereby further reducing drive load of the touch control module.

In an implementation, the first metal layer further includes a plurality of dummy metal grids, the dummy metal grids are disposed between adjacent first conductive patterns in a spaced manner, and the dummy metal grids are insulated from the first conductive patterns; or the second metal layer further includes a plurality of dummy metal grids, the dummy metal grids are disposed between adjacent second conductive patterns in a spaced manner, and the dummy metal grids are insulated from the second conductive patterns.

In an implementation, the metal grid is of a first size, and in the opening part, the first sub-metal conducting wire and the second sub-metal conducting wire are spaced by a second size. The second size is less than the first size.

In an implementation, the array substrate includes a plurality of pixel areas arranged in a matrix form, the display medium layer forms one pixel unit corresponding to each pixel area, a light shielding area is included between adjacent pixel units, the pixel unit is configured to emit light to display an image, each metal grid faces one pixel unit and overlaps the light shielding area, and a shape of the metal grid is the same as the shape of the pixel unit. One metal grid faces one pixel unit and surrounds the pixel unit, so that light brightness can be prevented from being affected because a metal conducting wire blocks an area of emergent light in the pixel area, thereby effectively ensuring image display brightness.

According to a second aspect, in an implementation of this application, a touch display apparatus includes the foregoing touch display panel and the touch control module. The touch control module is configured to identify, based on the received sensing signal, a location of the touch operation received by the touch display panel. The touch control module is located in an area other than an area in which a conductive pattern is disposed on the touch display panel, or the touch control module is disposed in an area other than the touch display panel.

### BRIEF DESCRIPTION OF DRAWINGS

FIG. 1 is a schematic diagram of a plane structure of a touch display panel according to a first embodiment of this application;
FIG. 2 is a schematic diagram of a cross-sectional structure of the touch display panel shown in FIG. 1 along a line II-II;
FIG. 3 is a schematic diagram of a plane structure of a pixel area on an array substrate shown in FIG. 1;
FIG. 4 is a schematic diagram of a plane structure of a touch sensing layer disposed on a package substrate shown in FIG. 2;
FIG. 5 is a schematic diagram of an enlarged structure of an overlapping area between a first conductive pattern and a second conductive pattern shown in FIG. 4;
FIG. 6 is a schematic diagram of exploded structures of a first conductive pattern and a second conductive pattern shown in FIG. 5;
FIG. 7 is a schematic diagram of a cross-sectional structure of the conductive pattern shown in FIG. 5 along a line B-B;
FIG. 8 is a schematic diagram of an enlarged structure of an overlapping area between a first conductive pattern and a second conductive pattern shown in FIG. 4 according to a second embodiment of this application;
FIG. 9 is a schematic diagram of exploded structures of a first sub-metal conducting wire and a second sub-metal conducting wire shown in FIG. 8;
FIG. 10 is a schematic diagram of an enlarged structure of an overlapping area between a first conductive pattern and a second conductive pattern shown in FIG. 4 according to a third embodiment of this application;
FIG. 11 is a schematic diagram of exploded structures of a first sub-metal conducting wire and a second sub-metal conducting wire shown in FIG. 10;
FIG. 12 is a schematic diagram of an enlarged structure of an overlapping area between a first conductive pattern and a second conductive pattern shown in FIG. 4 according to a fourth embodiment of this application;
FIG. 13 is a schematic diagram of exploded structures of a first sub-metal conducting wire and a second sub-metal conducting wire shown in FIG. 12;
FIG. 14 is a schematic diagram of an enlarged structure of an overlapping area between a first conductive pattern and a second conductive pattern shown in FIG. 4 according to a fifth embodiment of this application;
FIG. 15 is a schematic diagram of exploded structures of a first sub-metal conducting wire and a second sub-metal conducting wire shown in FIG. 12;
FIG. 16 is a schematic diagram of an enlarged structure of an overlapping area between a first conductive pattern and a second conductive pattern shown in FIG. 4 according to a sixth embodiment of this application;
FIG. 17 is a cross-sectional view of a touch display panel shown in FIG. 16 at a second location;
FIG. 18 is a cross-sectional view of the touch display panel shown in FIG. 16 at a third location;
FIG. 19 is a schematic diagram of an enlarged structure of an overlapping area between a first conductive pattern and a second conductive pattern shown in FIG. 4 according to a seventh embodiment of this application;
FIG. 20 is a schematic diagram of exploded structures of a first sub-metal conducting wire and a second sub-metal conducting wire shown in FIG. 19;
FIG. 21 is a schematic diagram of a structure of the first conductive pattern shown in FIG. 16 according to an eighth embodiment of this application; and
FIG. 22 is a schematic diagram of distribution of locations of a first conductive pattern and a second conductive pattern and an output first sensing signal.

### DESCRIPTION OF EMBODIMENTS

Specific embodiments are used below to describe this application.

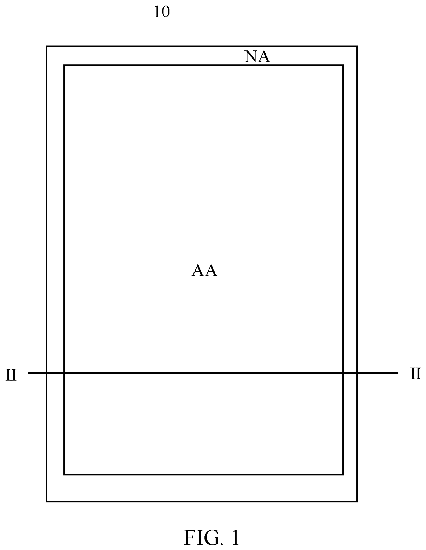

Refer to FIG. 1. FIG. 1 is a schematic diagram of a plane structure of a touch display panel 10 according to a first embodiment of this application.

The touch display panel 10 includes an active area AA (active area) and a non-active area NA (non-active area). The active area AA is disposed on the touch display panel 10 as a picture display area, and is configured to display an image. The non-active area NA is configured to dispose function modules such as a display drive control module and a touch drive control module. The touch display panel 10 may be applied to a touch display apparatus, for example, an electronic apparatus, such as a mobile phone or a tablet computer, that can perform display and touch functions.

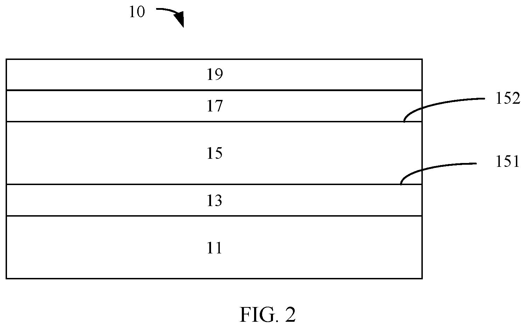

Refer to FIG. 2. FIG. 2 is a schematic diagram of a cross-sectional structure of the touch display panel 10 shown in FIG. 1 along a line II-II.

As shown in FIG. 2, the touch display panel 10 is configured to implement image display and touch operation detection. In this embodiment, the touch display panel 10 includes an array substrate 11, a display medium layer 13, and a package substrate 15 that are sequentially stacked from bottom to top in the figure. The display medium layer 13 is sandwiched between the array substrate 11 and the package substrate 15. The array substrate 11, the display medium layer 13, and the package substrate 15 form a display substrate.

In this embodiment, the display medium layer 13 is an organic light-emitting diode (Organic Light-Emitting Diode, OLED). Pixel areas that are arranged in a matrix form are disposed on the array substrate 11, and a drive circuit and a drive electrode that are configured to drive the display medium layer 13 to emit light are disposed in each pixel area. The package substrate 15 is configured to package the display medium layer 13. The drive circuit cooperates with the drive electrode to drive a material of the display medium layer to emit light, so as to perform image display. In this embodiment, the package substrate 15 is silicon nitride (SINx) or an organic coating (Organic Coating) material.

In this embodiment, the package substrate 15 includes two opposite surfaces: a first surface 151 and a second surface 152. The first surface is adjacent to the display medium layer 13, and the second surface 152 is away from the display medium layer 13. A touch sensing layer 17 and a protective layer 19 are sequentially disposed on the second surface 152. The touch sensing layer 17 is configured to identify a location of touch performed on the touch display panel 10. The protective layer 19 is configured to protect layer structures such as the touch sensing layer 17 and the package substrate 15. A manner in which the touch sensing layer 17 is disposed on a surface of the package substrate 15 is a touch on encapsulation (Touch On Encapsulation, TOE) manner.

In this embodiment, when the display medium layer 13 is an organic light emitting display material, the display panel is an active-matrix organic light-emitting diode (Active-Matrix Organic Light-Emitting Diode, AMOLED) display panel. The touch display panel 10 may be made into a flexible and bent panel structure, to be used in a flexible touch display apparatus, for example, a foldable mobile phone or tablet computer.

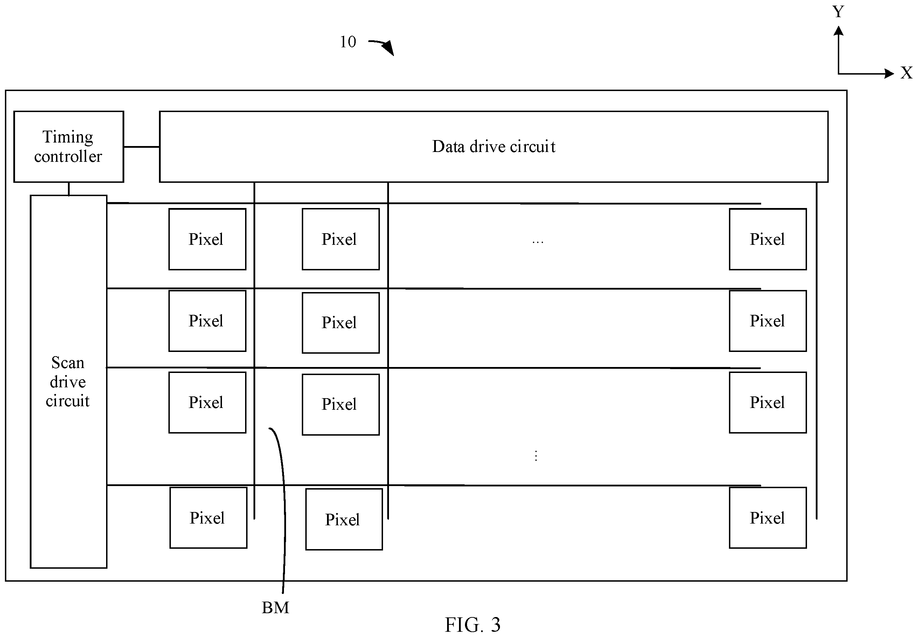

Refer to FIG. 3. FIG. 3 is a schematic diagram of a plane structure of a pixel area on the array substrate 11 shown in FIG. 1.

As shown in FIG. 3, in an active area AA, a plurality of pixel areas (not shown) that are arranged in a matrix form in a first direction X and a second direction Y are disposed on a surface that is of the array substrate 11 and that is adjacent to the display medium layer 13. A drive circuit is disposed in each pixel area. A thin-film transistor and a capacitor included in the drive circuit may be formed by depositing and etching a semiconductor material on the surface of the array substrate.

In this embodiment, a shape of the pixel area may be set according to an actual requirement, for example, may be a square, a diamond, a pentagon, or a hexagon. Certainly, the foregoing shape of the pixel area is merely an example for description, and no limitation is imposed thereto.

The drive circuit in each pixel area can drive a light-emitting material that faces the pixel area and that is included in the display medium layer 13 to emit light. In this embodiment, a drive circuit in a pixel area cooperates with the corresponding display medium layer 13 to form one pixel unit Pixel.

The display medium layer 13 corresponding to adjacent pixel units Pixel may include different light-emitting materials to emit light of different colors. Preferably, there is a light shielding area (BM) between adjacent pixel units Pixel, to prevent light emitted between the adjacent pixel units Pixel from interfering with each other.

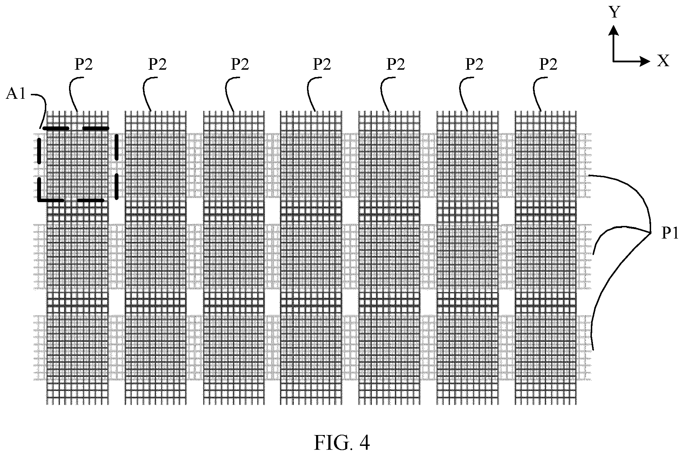

In a non-active area NA, a display drive circuit configured to drive the drive circuit in each pixel area and a touch control module TC (FIG. 4) are disposed. The display drive circuit includes a data drive circuit configured to provide an image data signal, a scan drive circuit configured to perform line scanning, and a timing controller (Tcon) configured to control operating timing of the data drive circuit and the scan drive circuit.

Refer to FIG. 4. FIG. 4 is a schematic diagram of a plane structure of the touch sensing layer 17 disposed on the package substrate 15 shown in FIG. 2.

As shown in FIG. 4, the touch sensing layer 17 includes a plurality of first conductive patterns P1 that extend in the first direction X and that are disposed in parallel at a preset distance in the second direction Y, and a plurality of second conductive patterns P2 that extend in the second direction Y and that are disposed in parallel at a preset distance in the first direction X. The plurality of first conductive patterns P1 and the plurality of second conductive patterns P2 are respectively located in different layer structures and are mutually insulated, and are electrically connected to the touch control module TC by using a signal transmission line L.

In this embodiment, the first conductive pattern P1 and the second conductive pattern P2 partially overlap in an extension direction and form a mutual capacitive sensing module, configured to sense a first sensing signal generated by touch of a user, and transmit the first sensing signal to the touch control module TC through the signal transmission line L. The touch control module TC identifies a location of the touch operation based on the first sensing signal.

In this embodiment, the plurality of first conductive patterns P1 may be used as a touch driving electrode TX, and the plurality of second conductive patterns P2 may be used as a touch sensing electrode RX. In other words, the plurality of first conductive patterns P1 are configured to receive a touch drive signal provided by the touch control module TC, the plurality of first conductive patterns P1 generate an induction capacitance with the plurality of second conductive patterns P2 by using the touch drive signal, and the plurality of second conductive patterns P2 may correspondingly output a corresponding electrical signal as a touch induction signal. When the capacitance between the first conductive pattern P1 and the second conductive pattern P2 changes due to a touch operation of the user, the touch sensing signal output by the second conductive pattern P2 also changes correspondingly, and a specific location of the touch operation may be identified by analyzing a specific location at which the sensing signal changes.

The first conductive pattern P1 and/or the second conductive pattern P2 are/is a grid shape formed by metal conducting wires. In this embodiment, the first conductive pattern P1 and the second conductive pattern P2 are strip-shaped, and both include a plurality of regular metal grids. A shape of the metal grid may be a square, a rectangle, a rhombus, or a polygon of another type.

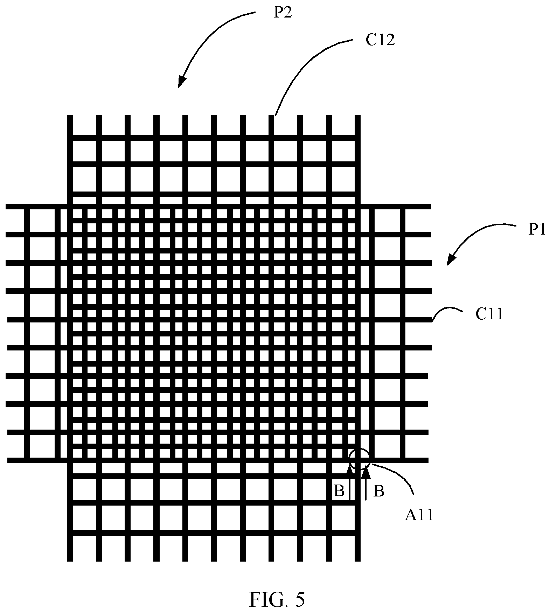

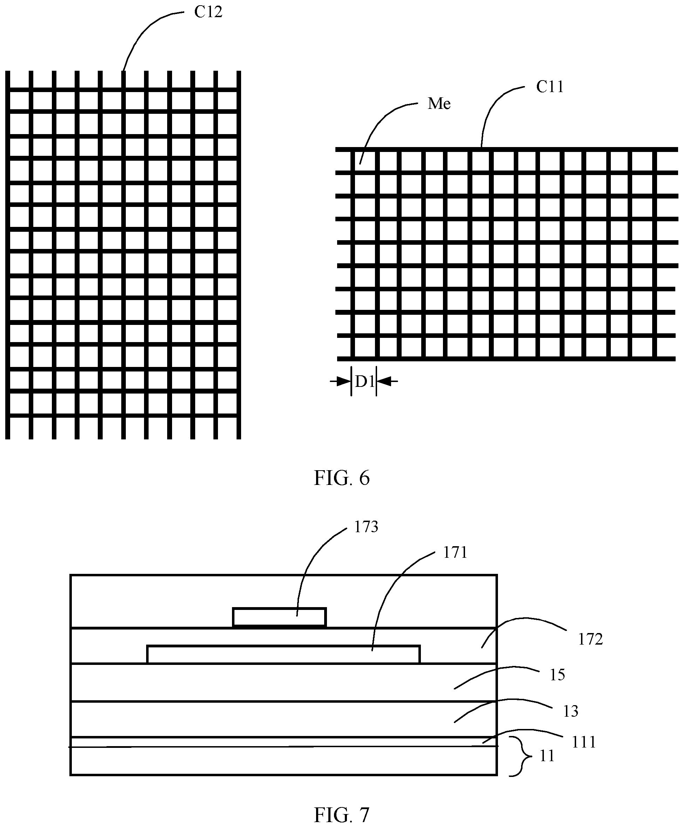

Refer to FIG. 5 and FIG. 6. More specifically, FIG. 5 is a schematic diagram of an enlarged structure of an overlapping area A1 between the first conductive pattern P1 and the second conductive pattern P2 shown in FIG. 4, and FIG. 6 is a schematic diagram of exploded structures of the first conductive pattern P1 and the second conductive pattern P2 shown in FIG. 5.

As shown in FIG. 5 and FIG. 6, the first conductive pattern P1 includes a plurality of metal grids Me1 that are consecutively arranged and are in a square shape, and the second conductive pattern P2 also includes a plurality of metal grids that are consecutively arranged and are in a square shape.

In this embodiment, the metal grid Me1 in the first conductive pattern P1 and the second conductive pattern P2 is a square, and a side length of the square metal grid is a first size D1.

The overlapping area A1 includes a first sub-metal conducting wire C11 that extends in the first direction X and a second sub-metal conducting wire C12 that extends in the second direction Y, where a plurality of second sub-metal conducting wires C11 and a plurality of second sub-metal conducting wires C12 overlap in an extension direction of the plurality of first sub-metal conducting wires C11 and the plurality of second sub-metal conducting wires C12.

In this embodiment, the first sub-metal conducting wire C11 is a square metal grid, and the second sub-metal conducting wire C12 is a square metal grid. The metal grid faces the light shielding area BM, and each metal grid correspondingly surrounds one pixel unit Pixel, that is, a projection of the metal grid on the array substrate includes one pixel unit Pixel, thereby effectively preventing display brightness of the pixel unit Pixel from being affected when the metal conducting wire fully overlaps the pixel area.

Refer to FIG. 7. FIG. 7 is a schematic diagram of a cross-sectional structure along a line B-B in the conductive pattern shown in FIG. 5. As shown in FIG. 7, in this embodiment, the array substrate 11 includes a display electrode 111, and the display electrode 111 is configured to receive an external display signal and drive, based on the display signal, the display medium layer 13 to display an image. The display electrode 111 includes a cathode and an anode.

The touch sensing layer 17 includes a first metal layer 171, a first insulation layer 173, and a second metal layer 172 that are sequentially stacked. The first metal layer 171 includes the plurality of first conductive patterns P1 extending in the first direction X as shown in FIG. 4, and the second metal layer 172 includes the plurality of second conductive patterns P2 extending the second direction Y as shown in FIG. 4.

As shown in FIG. 7, the first sub-metal conducting wire C11 in the first conductive pattern P1 and the second sub-metal conducting wire C12 in the second conductive pattern P2 face each other. That is, a projection of the second sub-metal conducting wire C12 on the first metal layer 171 at least partially overlaps the first sub-metal conducting wire C11.

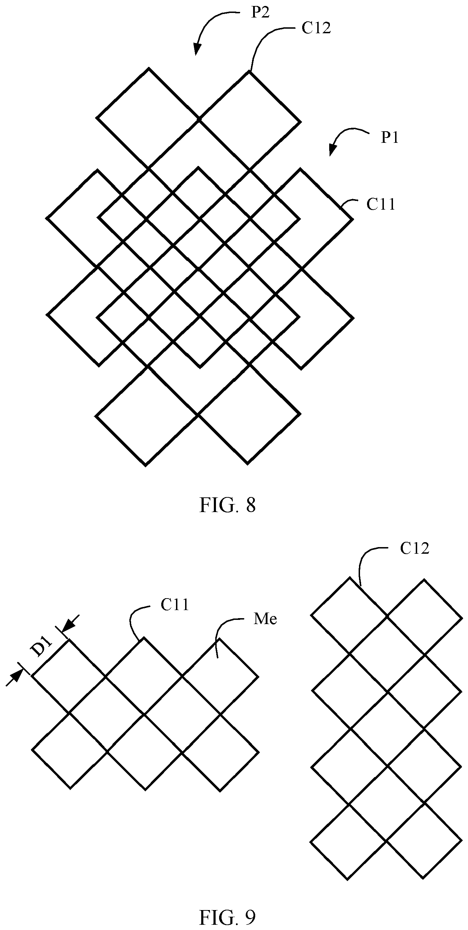

Refer to FIG. 8 and FIG. 9. FIG. 8 is a schematic diagram of an enlarged structure of an overlapping area A between the first conductive pattern and the second conductive pattern shown in FIG. 4 according to a second embodiment of this application, and FIG. 9 is a schematic diagram of exploded structures of the first sub-metal conducting wire C11 and the second sub-metal conducting wire C12 shown in FIG. 8.

As shown in FIG.8 and FIG. 9, the first sub-metal conducting wire C11 is a metal conducting wire of a rhombus metal grid extending in the first direction X, and the second sub-metal conducting wire C12 is a metal conducting wire of a rhombus metal grid extending in the second direction Y A shape and a size of a metal grid are basically the same as a shape and a size of the pixel unit Pixel. In this embodiment, the metal grid faces and surrounds the pixel unit Pixel. This effectively prevents display brightness of a pixel unit Pixel from being affected when the metal conducting wire fully overlaps the pixel area.

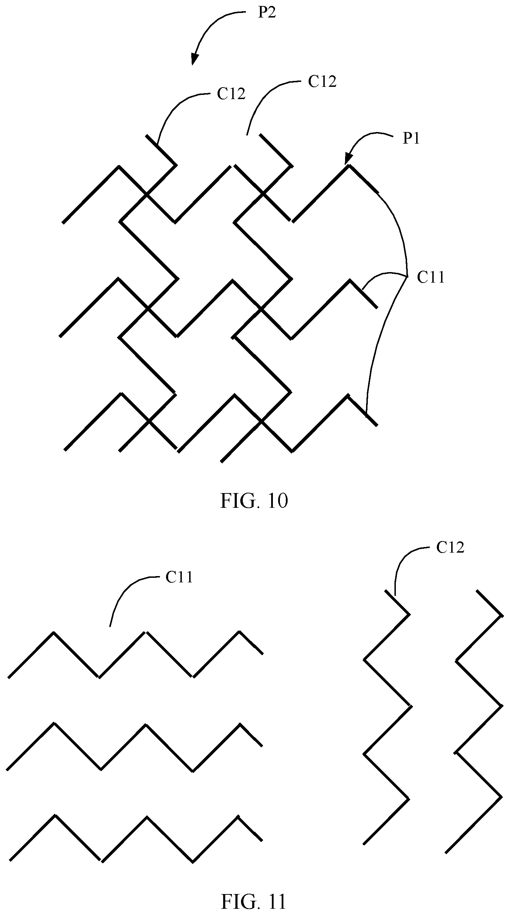

Refer to FIG. 10 and FIG. 11. FIG. 10 is a schematic diagram of an enlarged structure of an overlapping area A1 between the first conductive pattern and the second conductive pattern shown in FIG. 4 according to a third embodiment of this application, and FIG. 11 is a schematic diagram of exploded structures of the first sub-metal conducting wire C11 and the second sub-metal conducting wire C12 shown in FIG. 10.

As shown in FIG. 10 and FIG. 11, the first sub-metal conducting wire C11 is a triangular wave-shaped metal conducting wire extending in the first direction X, and the second sub-metal conducting wire C12 is a triangular wave-shaped metal conducting wire extending in the second direction Y.

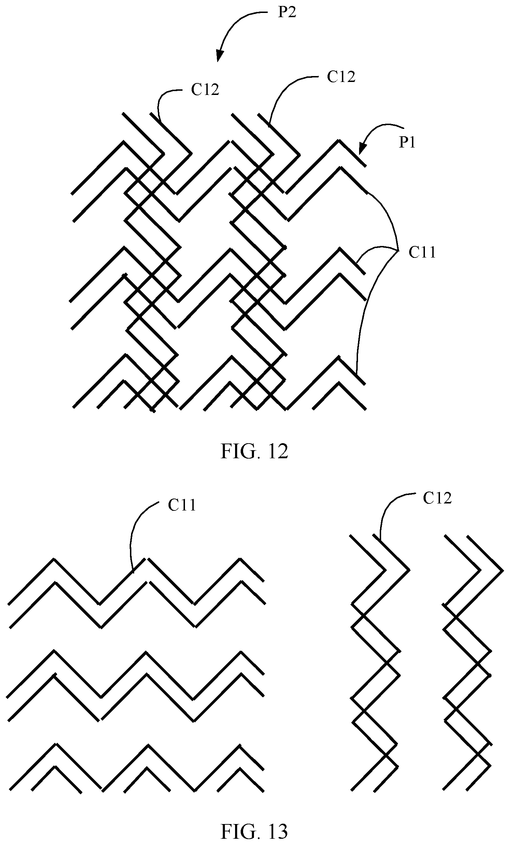

Refer to FIG. 12 and FIG. 13. FIG. 12 is a schematic diagram of an enlarged structure of an overlapping area A1 between the first conductive pattern and the second conductive pattern shown in FIG. 4 according to a fourth embodiment of this application, and FIG. 13 is a schematic diagram of exploded structures of the first sub-metal conducting wire C11 and the second sub-metal conducting wire C12 shown in FIG. 12.

As shown in FIG. 12 and FIG. 13, the first sub-metal conducting wire C11 is two triangular wave-shaped parallel metal conducting wires that extend in the first direction X, and the second sub-metal conducting wire C12 is two triangular wave-shaped parallel metal conducting wires that extend in the second direction Y.

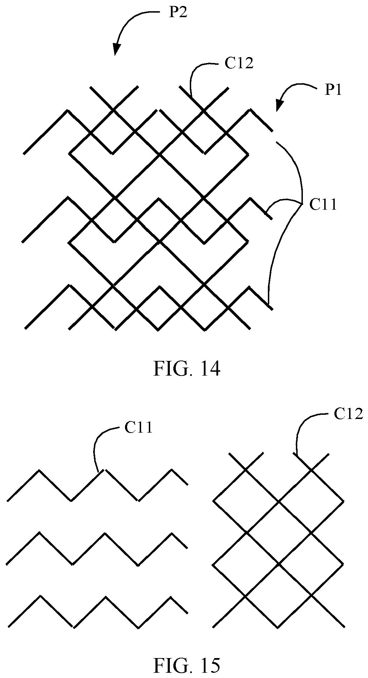

Refer to FIG. 14 and FIG. 15. FIG. 14 is a schematic diagram of an enlarged structure of an overlapping area A1 between the first conductive pattern and the second conductive pattern shown in FIG. 4 according to a fifth embodiment of this application, and FIG. 15 is a schematic diagram of exploded structures of the first sub-metal conducting wire C11 and the second sub-metal conducting wire C12 shown in FIG. 12.

As shown in FIG. 14 and FIG. 15, the first sub-metal conducting wire C11 is a triangular wave-shaped metal conducting wire extending in the first direction X, and the second sub-metal conducting wire C12 is a triangular wave-shaped metal conducting wire extending in the second direction Y A shape and a size of a metal grid are basically the same as a shape and a size of the pixel unit Pixel. In this embodiment, the metal grid faces and surrounds the pixel unit Pixel. This effectively prevents display brightness of a pixel unit Pixel from being affected when the metal conducting wire fully overlaps the pixel area.

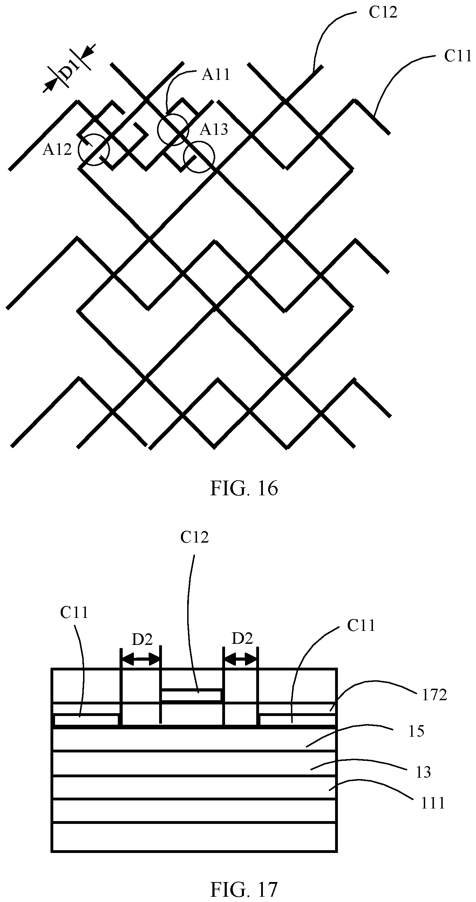

Refer to FIG. 16. FIG. 16 is a schematic diagram of an enlarged structure of an overlapping area A1 between a first conductive pattern and a second conductive pattern shown in FIG. 4 according to a sixth embodiment of this application.

As shown in FIG. 16, the first sub-metal conducting wire C11 is a triangular wave-shaped metal conducting wire extending in the first direction X, and the second sub-metal conducting wire C12 is a triangular wave-shaped metal conducting wire extending in the second direction Y A shape and a size of a metal grid are basically the same as a shape and a size of the pixel unit Pixel. In this embodiment, the metal grid faces and surrounds the pixel unit Pixel. This effectively prevents display brightness of a pixel unit Pixel from being affected when the metal conducting wire fully overlaps the pixel area.

As shown in FIG. 16, in a first location A11 of the overlapping area A, the first sub-metal conducting wire C11 in the first conductive pattern P1 and the second sub-metal conducting wire C12 in the second conductive pattern P2 face each other. Refer to FIG. 6. That is, a projection of the second sub-metal conducting wire C12 on the first metal layer 171 at least partially overlaps the first sub-metal conducting wire C11.

Refer to FIG. 17. FIG. 17 is a cross-sectional view of the touch display panel shown in FIG. 16 at a second location A12.

As shown in FIG. 17, at the second location A12 in the overlapping area A1 of the first conductive pattern P1 and the second conductive pattern P2, the first sub-metal conducting wire C11 in the first conductive pattern P1 and the second sub-metal conducting wire C12 in the second conductive pattern P2 face each other. The first sub-metal conducting wire C11 has a first opening part H1, and in the first opening part H1, and the second sub-metal conducting wire C12 faces the first opening H1. In addition, the first sub-metal conducting wire C11 and the second sub-metal conducting wire C12 are spaced by a second size D2, where the second size D2 is less than the first size D1.

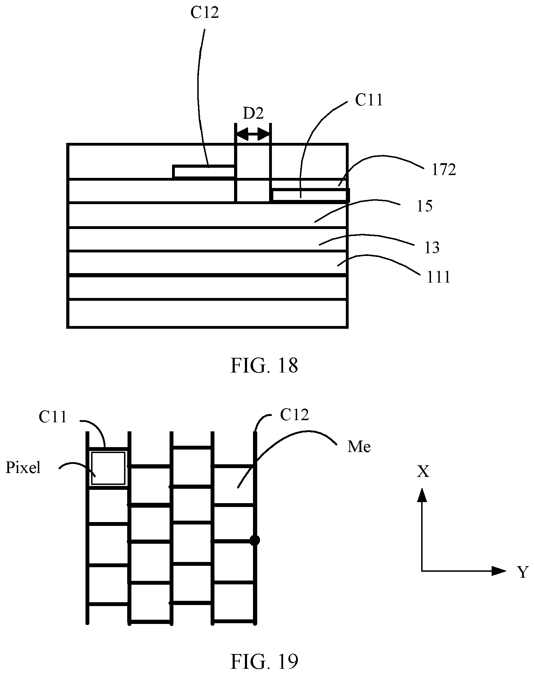

Refer to FIG. 18. FIG. 18 is a cross-sectional view of the touch display panel shown in FIG. 16 at a third location A13. As shown in FIG. 17, at the third location A13 in the overlapping area A1, the first sub-metal conducting wire C11 in the first conductive pattern P1 and the second sub-metal conducting wire C12 in the second conductive pattern P2 face each other. The first sub-metal conducting wire C11 has a second opening part H2. In the second opening part H2, the first sub-metal conducting wire C11 and the second sub-metal conducting wire C12 are spaced by the second size D2, where the second size D2 is less than the first size D1. In the overlapping region A1, to ensure that the first sub-metal conducting wire C11 is conductive in the first direction, in addition to a necessary continuous part, for example, at the first location A11, when the first sub-metal conducting wire C11 overlaps the second sub-metal conducting wire C12, the first sub-metal conducting wire C11 is continuous, and at the second location A12 and the third location A13 other than the first location A11, an opening part is disposed at a location at which the first sub-metal conducting wire C11 and the second sub-metal conducting wire C12 overlap, to reduce an induction capacitance of the first sub-metal conducting wire C11 and the second sub-metal conducting wire C12 in a vertical stacking direction, thereby reducing drive load of the touch control module TC.

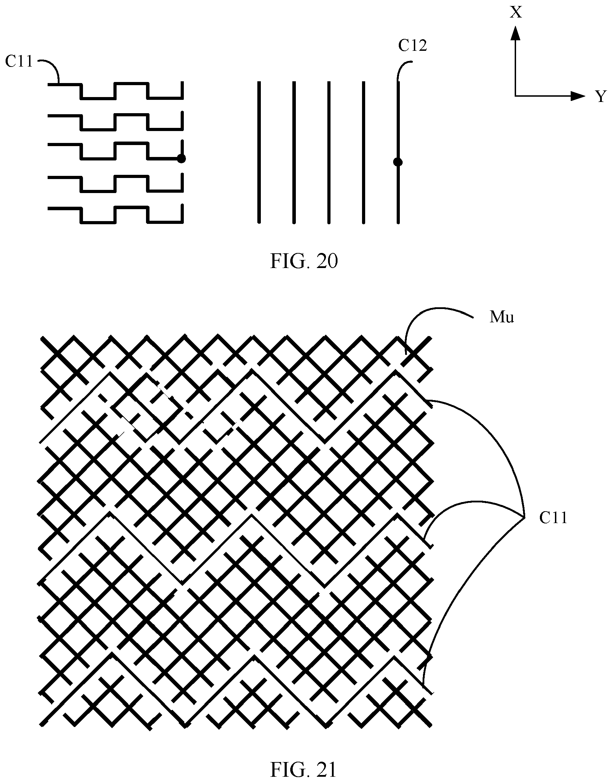

Refer to FIG. 19 and FIG. 20. FIG. 19 is a schematic diagram of an enlarged structure of an overlapping area A1 between the first conductive pattern and the second conductive pattern shown in FIG. 4 according to a seventh embodiment of this application, and FIG. 20 is a schematic diagram of exploded structures of the first sub-metal conducting wire C11 and the second sub-metal conducting wire C12 in the conductive pattern shown in FIG. 19.

As shown in FIG. 19 and FIG. 20, the first sub-metal conducting wire C11 is a square wave-shaped metal conducting wire extending in the first direction X, and the second sub-metal conducting wire C12 is a rectilinear metal conducting wire extending in the second direction Y. Two adjacent first sub-metal conducting wires C11 intersect two adjacent second sub-metal conducting wires C12 to form one square metal grid, and a shape and a size of one metal grid are substantially the same as a shape and a size of the pixel unit Pixel. In this embodiment, preferably, the metal grid faces the light shielding area BM (FIG. 3) and surrounds the pixel unit Pixel. This effectively prevents display brightness of the pixel unit Pixel from being affected when the metal conducting wire fully overlaps the pixel area.

Refer to FIG. 21. FIG. 21 is a schematic diagram of a structure of the first conductive pattern shown in FIG. 16 according to an eighth embodiment of this application.

As shown in FIG. 21, with reference to FIG. 7, the first metal layer 171 includes the first conductive pattern P1 including a dummy (Dummy) metal grid Mu and the first sub-metal conducting wire C11. The first sub-metal conducting wire C11 is not connected to the dummy metal grid Mu. In other words, the first sub-metal conducting wire C11 is insulated from the dummy metal grid Mu. In this embodiment, the first sub-metal conducting wire C11 and the dummy metal grid Mu are spaced by a preset distance, and the dummy metal grid Mu is in a dummy state.

In this embodiment, a shape of the dummy metal grid Mu is the same as a shape of the pixel unit Pixel, and may be a rhombus, a rectangle, a square, or the like. The dummy metal grid Mu faces the light shielding area BM and surrounds one pixel unit Pixel, to improve display brightness of the pixel unit Pixel.

It may be understood that, the first conductive pattern P1 formed by the first sub-metal conducting wire C11 in the first metal layer 171 may be obtained by cutting and separating from the dummy metal grid Mu.

Alternatively, the second metal layer 172 also includes the second conductive pattern P2 including a dummy (Dummy) metal grid and the second sub-metal conducting wire C12. The second sub-metal conducting wire C12 is not connected to the dummy metal grid Mu. In other words, the second sub-metal conducting wire C12 is insulated from the dummy metal grid Mu. In this embodiment, the second sub-metal conducting wire C12 and the dummy metal grid Mu are spaced by a preset distance, and the dummy metal grid Mu is in a dummy state.

Preferably, to reduce complexity of manufacturing the conductive pattern, one of the first metal layer 171 or the second metal layer 172 includes the dummy metal grid.

Compared with the conventional technology, as shown in FIG. 4 and FIG. 8 to FIG. 21, only some areas of the first metal layer 171 and the second metal layer 172 are provided with a conductive pattern, and the first sub-metal conducting wire C11 and the second sub-metal conducting wire C12 in the conductive pattern are used as the touch drive electrode TX and the touch sensing electrode RX, and cover a small area of the display substrate. Therefore, as shown in Table 1, a projection area of the first sub-metal conducting wire C11 and the second sub-metal conducting wire C12 on the display electrode 111 is small, in other words, an area in which the first sub-metal conducting wire C11 and the second sub-metal conducting wire C12 overlap on the display electrode 111 is small. Therefore, capacitance load and impedance generated by each first conductive pattern P1 and each second conductive pattern P2 with the display electrode 111 are small, and load of the touch sensing layer 17 is effectively reduced.

**Table 1**

| | |
|---|---|
| Capacitance of a display electrode corresponding to the first conductive pattern | 5.3 pF |
| Capacitance of a display electrode corresponding to the second conductive pattern | 5.6 pF |
| Resistance of the first conductive pattern | 8 Ω |
| Resistance of the second conductive pattern | 8.5 S2 |
| Ratio of covering the display electrode by the first conductive pattern | 20% |
| Ratio of covering the display electrode by the second conductive pattern | 20% |

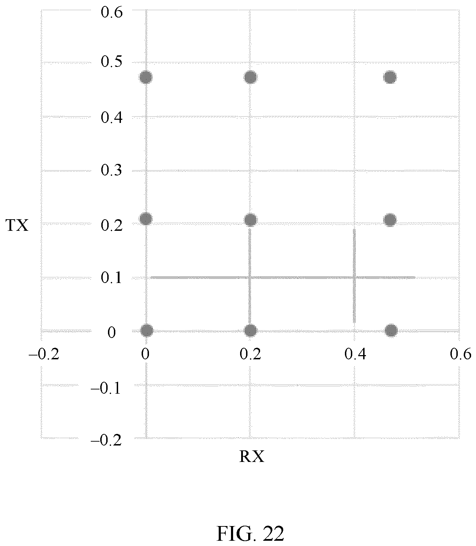

Further, because the first conductive pattern P1 and the second conductive pattern P2 are strip-shaped, that is, shapes of metal grids in areas, especially at edge locations, in the first conductive pattern P1 and the second conductive pattern P2 are relatively regular. FIG. 22 is a schematic diagram of distribution of locations of the first conductive pattern P1 and the second conductive pattern P2 and an output first sensing signal. As shown in FIG. 22, capacitance values formed at locations of the first conductive pattern P1 and the second conductive pattern P2 are relatively uniform. Therefore, when a touch operation is received, values of sensing signals output by the second conductive pattern P2 are basically the same, that is, in an area corresponding to the touch operation in the touch sensing layer 17, values of the sensing signals output by the second conductive pattern P2 are relatively uniform. In this way, a dispersion degree of the sensing signal is small, and a linearity is relatively high, and subsequent processing corresponding to the sensing signal is simple, thereby ensuring that location recognition of a touch operation is more accurate.

The foregoing descriptions are preferred embodiments of this application. It should be noted that a person of ordinary skill in the art may make several improvements or polishing without departing from the principle of this application, and the improvements or polishing shall also fall within the protection scope of this application.

## Claims

1. A touch display panel, comprising an array substrate, a display medium layer, and a package substrate that are sequentially stacked, wherein the display medium layer emits light to display an image through cooperation with the array substrate and the package substrate, wherein
the package substrate comprises a first surface and a second surface that are oppositely disposed, wherein the first surface is adjacent to the display medium layer, and the second surface is away from the display medium layer;
a first metal layer and a second metal layer are sequentially stacked on the second surface and are mutually insulated;
the first metal layer comprises a plurality of first conductive patterns extending in a first direction, the plurality of first conductive patterns are spaced by a preset distance in a second direction, and the first direction is perpendicular to the second direction;
the second metal layer comprises a plurality of second conductive patterns extending in the second direction, and the plurality of second conductive patterns are spaced by a preset distance in the first direction; and
the first conductive pattern and the second conductive pattern partially overlap to form an induction capacitance, and a first sensing signal is output when a touch operation is sensed.

2. The touch display panel according to claim 1, wherein
the first conductive pattern comprises a plurality of first sub-metal conducting wires, and the plurality of first sub-metal conducting wires form a plurality of metal grids.

3. The touch display panel according to claim 1, wherein
the first conductive pattern comprises a plurality of first sub-metal conducting wires, and the plurality of first sub-metal conducting wires are disposed in parallel with each other.

4. The touch display panel according to claim 1, wherein
the second conductive pattern comprises a plurality of second sub-metal conducting wires, and the plurality of second sub-metal conducting wires form a plurality of metal grids.

5. The touch display panel according to claim 1, wherein
the second conductive pattern comprises a plurality of second sub-metal conducting wires, and the plurality of second sub-metal conducting wires are disposed in parallel with each other.

6. The touch display panel according to any one of claims 1 to 5, wherein
in an area in which the first conductive pattern overlaps the second conductive pattern, at a location at which the first sub-metal conducting wire overlaps the second sub-metal conducting wire, the first sub-metal conducting wire has at least one opening part.

7. The touch display panel according to any one of claims 1 to 6, wherein
the first metal layer further comprises a plurality of dummy metal grids, the dummy metal grids are disposed between adjacent first conductive patterns in a spaced manner, and the dummy metal grids are insulated from the first conductive patterns; or
the second metal layer further comprises a plurality of dummy metal grids, the dummy metal grids are disposed between adjacent second conductive patterns in a spaced manner, and the dummy metal grids are insulated from the second conductive patterns.

8. The touch display panel according to claim 7, wherein
the metal grid has a first size;
at the opening part, the first sub-metal conducting wire and the second sub-metal conducting wire are spaced by a second size; and
the second size is less than the first size.

9. The touch display panel according to claim 8, wherein
the array substrate comprises a plurality of pixel areas arranged in a matrix form, the display medium layer forms one pixel unit corresponding to each pixel area, a light shielding area is comprised between adjacent pixel units, and the pixel unit is configured to emit light to display an image; and
each metal grid faces one pixel unit and coincides with the light shielding area, and a shape of the metal grid is the same as a shape of the pixel unit.

10. A touch display apparatus, comprising the touch display panel according to any one of claims 1 to 9 and a touch control module, wherein the touch control module is configured to identify, based on a received sensing signal, a location of a touch operation received by the touch display panel.
